# EUROPÄISCHE PATENTANMELDUNG

(11) **EP 4 651 133 A1**
(43) Veröffentlichungstag der Anmeldung: **19.11.2025**
(21) Anmeldenummer: 25174256.5
(22) Anmeldetag: 05.05.2025
(51) Int. Cl.: G11B 3/12

(54) **VORRICHTUNG ZUR LAGERUNG EINES TONARMS, INSBESONDERE EINES TONARMS EINES SCHALLPLATTENSPIELERS**

(30) Priorität: 07.05.2024 DE 102024112736
(71) Anmelder: clearaudio electronic GmbH, 91054 Erlangen (DE)
(72) Erfinder: Suchy, Robert, 91054 Erlangen (DE); Borovac, Marko, 91054 Erlangen (DE)
(74) Vertreter: Hafner & Kohl PartmbB

(57) **Zusammenfassung**

Vorrichtung (1) zur Lagerung eines Tonarms (2), insbesondere eines Tonarms (2) eines Schallplattenspielers, mit
- einem ersten Bauteil (3) und
- einem Tonarmhaltekörper (4), der über eine Lagerungseinrichtung (5) um eine erste Achse (6), insbesondere eine Vertikalachse, drehbar und um eine zweite Achse (7), insbesondere um eine Horizontalachse, schwenkbar zu dem ersten Bauteil (3) gelagert ist, wobei
wenigstens ein erstes Magnetmittel (8) an dem Tonarmhaltekörper (4) und wenigstens ein zweites Magnetmittel (9) an dem ersten Bauteil (3) angeordnet oder ausgebildet sind, wobei das erste Magnetmittel (8) und das zweite Magnetmittel (9) über eine magnetisch sich anziehende und/oder abstoßende Magnetkraft miteinander wechselwirken.

## Beschreibung

Vorrichtung zur Lagerung eines Tonarms, insbesondere eines Tonarms eines Schallplattenspielers.

Entsprechende Vorrichtungen zur Lagerung eines Tonarms sind aus dem Stand der Technik dem Grunde nach bekannt. So ist es bekannt, einen Tonarm über eine sogenannte Ein-Punkt-Lagerung zu lagern, damit der Tonarm sich möglichst frei bewegen kann und lediglich geringe Widerstände während des geführten Kontakts des Tonarms durch dessen in einer rotierenden Schallplattenrille liegenden Abtastnadel erfolgt. Nachteilig hierbei ist es, dass aufgrund der Ein-Punkt-Lagerung es zu einem Aufschaukeln bzw. zu einem Taumeln des Tonarms kommen kann, da der Tonarm lediglich über zwei punktförmige Lagerungspunkte, einmal an der Lagerungseinrichtung des Tonarms am Plattenspieler und einmal über die Abtastnadel in der Schallplattenrille gelagert ist. Aufgrund der labilen Lagerung des Tonarms kann es zu überlagerten und/oder zu aufschaukelnden bzw. periodischen Bewegungen des Tonarms kommen, welche sich nachtteilig auf das Abtastergebnis bzw. auf das erzeugte Tonsignal auswirken.

Der Erfindung liegt die Aufgabe zugrunde, eine Vorrichtung zur Lagerung eines Tonarms anzugeben, welche eine hinreichende und stabile Führung des Tonarms bei zugleich geringen mechanischen Widerständen bei einer bestimmungsgemäßen Bewegung des Tonarms ermöglicht.

Die Aufgabe wird durch eine Vorrichtung zur Lagerung eines Tonarms, insbesondere eines Tonarms eines Schallplattenspielers, gemäß Anspruch 1 gelöst. Die hierzu abhängigen Ansprüche betreffen mögliche Ausführungsformen der Vorrichtung. Ferner wird die Aufgabe durch ein Verfahren gemäß Anspruch 15 gelöst.

Die Erfindung betrifft eine Vorrichtung zur Lagerung eines Tonarms, insbesondere eines Tonarms eines Schallplattenspielers. Die Vorrichtung umfasst ein erstes Bauteil und einen Tonarmhaltekörper, der über eine Lagerungseinrichtung um eine erste Achse, insbesondere eine Vertikalachse, drehbar und um eine zweite Achse, insbesondere um eine Horizontalachse, schwenkbar an dem ersten Bauteil gelagert ist. Dabei kann es sich demnach um eine Lagerung für einen sogenannten Radialtonarm handeln, also einen um eine senkrechte Achse drehbar gelagerten Tonarm. Durch die Drehbarkeit um die erste Achse also beispielsweise die Vertikalachse, kann der Tonarm während des Kontakts des Abtastkörpers, insbesondere einer Abtastnadel, in der Rille der abgetasteten Schallplatte geführt bzw. bewegt werden.

Aufgrund der sowohl über eine horizontale als auch über eine vertikale Achse erfolgende drehbare Lagerung des Tonarms bzw. aufgrund einer Ein-Punkt-Lagerung des Tonarms neigt dieser grundsätzlich zu einer Taumelbewegung um den Lagerungspunkt. Um die Tonarmlagerung zu stabilisieren, erfolgt zusätzlich zu der Ein-Punkt-Lagerung bzw. zu der punktuellen, also über einen Punkt erfolgenden Lagerung vermittels der Lagerungseinrichtung eine magnetische Lagerung bzw. Abstützung des Tonarms. Hierzu ist wenigstens ein erstes Magnetmittel an dem Tonarmhaltekörper und wenigstens ein zweites Magnetmittel an dem ersten Bauteil angeordnet oder ausgebildet, wobei das erste Magnetmittel und das zweite Magnetmittel über eine magnetisch sich anziehende und/oder abstoßende Magnetkraft miteinander wechselwirken. Aufgrund dessen, dass zusätzlich zu der berührenden Lagerungseinrichtung eine zusätzliche magnetische Einwirkung mittelbar oder unmittelbar auf den Tonarm bzw. auf den Tonhaltekörper erfolgt, kann ein Taumeln des Tonarmhaltekörpers bzw. des Tonarms um den Lagerungspunkt der Lagerungseinrichtung verhindert oder gedämpft werden. Dies wird ohne eine Erhöhung von mechanischen Widerständen für die Drehbewegung des Tonarmhaltekörpers bzw. des Tonarms um die erste Achse, insbesondere um die Vertikalachse, erreicht. Hierbei ist zu bemerken, dass der Tonarm während seines bestimmungsgemäßen Betriebs eine Drehbewegung um die Vertikalachse ausführt und die magnetische Wechselwirkung zwischen dem ersten und zweiten Magnetmittel über die Drehbewegung des Tonarms homogen bleibt. D. h. die wirksamen Magnetkräfte zwischen der ersten und zweiten Magnetmittel führen über die Drehbewegung und damit über eine Verstellung der relativen Lage der ersten und zweiten Magnetmittel - also deren Verdrehung relativ zueinander - nicht zu magnetkraftbedingten Ungleichmäßigkeiten in der Drehbewegung. Mit anderen Worten wird kein, auch keine temporäre bzw. drehwinkelabhängige, Widerstandserhöhung oder Widerstandsveränderung durch die Wechselwirkung der Magnetkräfte der ersten und zweiten Magnetmittel während der bestimmungsgemäßen Drehbewegung des Tonarms bzw. während der bestimmungsgemäßen Drehbewegung zwischen dem Tonarmhaltekörper und dem ersten Bauteil erwirkt. Damit kann die Magnetkraft bzw. der magnetische Fluss, welcher aufgrund der ersten und zweiten Magnetmittel in einem Spalt zwischen den ersten und zweiten Magnetmitteln vorliegt, über die Drehbewegung des Tonarmhaltekörpers relativ zum ersten Bauteil konstant sein. Insbesondere erfolgt während der bestimmungsgemäßen Drehbewegung des Tonarms und/oder des Tonarmhaltekörpers eine Relativbewegung zwischen dem ersten und zweiten Magnetmittel, wobei diese nicht zu einer Veränderung der wirkenden magnetischen Kräfte der Magnetmittel führt, sodass eine sanfte Verdrehung ohne Drehwiderstandsschwankungen ermöglicht wird.

Es ist möglich, dass das erste Bauteil unterhalb des Tonarmhaltekörpers angeordnet ist. Dadurch, dass das erste Bauteil unterhalb des Tonarmhaltekörpers angeordnet ist, kann eine tiefe Anordnung der ersten Magnetmittel vorgesehen werden, sodass diese den optischen Gesamteindruck des Tonarmhaltekörpers nicht beeinträchtigen und/oder die ersten Magnetmittel vor Staub und äußeren mechanischen Einflüssen geschützt sind. So wird das erste Bauteil durch den Tonarmhaltekörper zumindest oberseitig wenigstens abschnittsweise abgedeckt bzw. geschützt. Auch lässt sich eine kompakte Anordnung erreichen, da ein gestufter Aufbau in der Höhe erfolgen kann, sodass in der Hochachse zuerst zumindest überwiegend das erste Bauteil und nach oben hin nachfolgend zumindest überwiegend der Tonarmhaltekörper angeordnet ist.

Das erste Bauteil kann beispielsweise eine Aufnahmeausnehmung aufweisen, in welche der Tonarmhaltekörper zumindest abschnittsweise aufnehmbar ist. Dadurch, dass der Tonarmhaltekörper zumindest abschnittsweise in eine Aufnahmeausnehmung des ersten Bauteils einragt bzw. eintritt, kann eine Trennfuge zwischen Tonarmhaltekörper und erstem Bauteil eine von einer geraden Linie abweichende Form aufweisen. Mit anderen Worten kann die Trennfuge eine von einer Ebene abweichende Geometrie aufweisen, sodass nach Art ineinandergreifender Abschnitte ein Verschluss oder eine labyrinthartige Struktur der Trennfuge sich ergibt, sodass das Eindringen von Fremdkörpern oder Staub in die Trennfuge verhindert oder erschwert wird. Auch kann durch die zumindest abschnittsweise Aufnahme des Tonarmhaltekörpers in einer Aufnahmeausnehmung des ersten Bauteils ein kompakter Aufbau der Vorrichtung erreicht werden.

Die Aufnahmeausnehmung kann beispielsweise als Nut bevorzugt als Ringnut, besonders bevorzugt als kreisförmige Ringnut, ausgebildet sein. Diese Nut bzw. Ringnut kann eine Öffnung aufweisen, die zum Tonarmhaltekörper weist und/oder deren Öffnungsrichtung entlang einer Rotationsachse, insbesondere der ersten Achse bzw. der Vertikalachse, des Tonarmhaltekörpers bzw. der Lagerungseinrichtung ausgerichtet ist. In einer als Ringnut ausgebildeten Aufnahmeausnehmung des ersten Bauteils kann ein zumindest abschnittsweise als Ringwulst, insbesondere als Kreisringwulst, ausgebildeter Tonarmhaltekörper aufgenommen sein. Die Aufnahmeausnehmung und/oder ein in die Aufnahmeausnehmung eintauchender Eintauchabschnitt des Tonarmhaltekörpers kann einen geschlossenen oder einen teilweise unterbrochenen Ring, insbesondere Kreisring, ausbilden. Ein teilweise unterbrochener bzw. Lücken aufweisender Kreisring kann beispielsweise durch Elemente gebildet werden, die auf einer Kreisringlinie angeordnet sind und zwischen sich auf der Kreisringlinie Lücken aufweisen. Es ist möglich, dass die Aufnahmeausnehmung und/oder der Eintauchabschnitt des Tonarmhaltekörpers symmetrisch, insbesondere punktsymmetrisch und/oder rotationssymmetrisch, ausgebildet ist bzw. sind. Eine radial innere Begrenzungswand der Aufnahmeausnehmung kann höher oder gleich hoch ausgebildet sein als eine radial äußere Begrenzungswand der Aufnahmeausnehmung.

Es ist möglich, dass das erste Bauteil als ringförmiger Körper ausgebildet ist. Beispielsweise ist das erste Bauteil als ein kreisringförmiger Körper ausgebildet. Das erste Bauteil kann beispielsweise eine symmetrische, insbesondere eine punkt- und/oder rotationssymmetrische Form aufweisen. Es ist möglich, dass das erste Bauteil eine Punkt- und/oder Rotationssymmetrie um die erste Achse, insbesondere um die Vertikalachse, der Lagerungseinrichtung aufweist.

Das erste Bauteil kann beispielsweise unbeweglich bzw. starr mit einer Lagerungseinrichtung angeordnet oder ausgebildet sein. D. h. z. B., dass das erste Bauteil zu einer Basis eines Plattenspielers (a) drehbar und arretierbar und damit zumindest temporär unbeweglich und starr oder (b) nichtdrehbar befestigt ist. Damit kann das erste Bauteil auf technisch einfache und kostengünstige Weise an einer Basis eines Plattenspielers angeordnet oder ausgebildet sein. Die Plattenspielerbasis bildet dabei den Bestandteil eines Plattenspielers, der eine Abstützung zu einer Aufstellfläche des Plattenspielers ermöglicht. Beispielsweise kann die Basis des Plattenspielers ein Grundrahmen sein, an bzw. auf welchem ein Plattenteller und der Tonarm drehbar gelagert ist.

Das erste Magnetmittel und/oder das zweite Magnetmittel kann beispielsweise wenigstens zwei Magnetelemente aufweisen. Durch die Verwendung von mehr als einem Magnetelement für das erste und/oder das zweite Magnetmittel kann die wirksame Magnetkraft bzw. das wirksame Magnetfeld auf einfache und komfortable Weise verstärkt werden. Auch wird es ermöglicht, durch eine gezielte Anordnung von mehr als einem Magneten für das erste und/oder das zweite Magnetmittel eine Wirkrichtung der Magnetkräfte gezielt vorzugeben. Auch wird es damit erreicht, dass eine Überdimensionierung der vorliegenden Magnetkräfte verhindert wird, da eine gezielte Wirkung von Magnetkräften dort, wo diese für das Stabilisieren der Lagerung des Tonarms notwendig sind, vorliegt.

Es ist möglich, dass die von dem ersten und zweiten Magnetmittel ausgehenden Magnetkräfte symmetrisch zu der ersten Achse, insbesondere zu der Rotationsachse des Tonarmhaltekörpers wirken. D. h. z. B., dass das erste Magnetmittel und das zweite Magnetmittel jeweils symmetrisch zu der ersten Achse, insbesondere punktsymmetrisch, zu der ersten Achse, angeordnet oder ausgebildet sind, um bei einer Drehbewegung des Tonarmhaltekörpers eine auf einer die erste Achse, insbesondere senkrecht, schneidenden Geraden zwei, bevorzugt sich in deren Summe aufhebende, Magnetkräfte aufzuweisen. So kann eine in eine erste, in eine erste Radialrichtung des Tonarmhaltekörpers ausgehende Magnetkraft sich mit einer zweiten, in eine von der ersten Radialrichtung entgegengesetzte Radialrichtung weisende Magnetkraft aufheben, d. h. die Kraftbeträge sind gleich, jedoch weisen die Kraftvektoren in entgegengesetzte Richtungen.

Alternativ oder zusätzlich kann zumindest ein erstes und ein zweites Magnetelement des ersten Magnetmittels oder zumindest ein erstes und ein zweites Magnetelement des zweiten Magnetmittels symmetrisch, insbesondere punktsymmetrisch und/oder spiegelsymmetrisch, zueinander angeordnet oder ausgebildet sein. Die symmetrische Anordnung der wenigstens zwei Magnetelemente des ersten und/oder zweiten Magnetmittels kann beispielsweise eine Symmetrie, insbesondere eine Punkt- oder Drehsymmetrie, zur ersten Achse, d. h. z. B. zur Vertikalachse, der Lagerungseinrichtung umfassen.

Es ist möglich, dass das erste oder zweite Magnetmittel als ein einstückiger scheibenförmiger oder ringförmiger, insbesondere als ein eine Kreisscheibe oder als ein eine Kreisringform aufweisender, Körper ausgebildet ist. Damit kann eine homogene magnetische Wirkung des entsprechend ausgebildeten Magnetmittels über relative Drehbewegung dieses Magnetmittels zu dem weiteren Magnetmittel erreicht werden. Hierzu ist die Drehachse der relativen Drehbewegung des ersten und zweiten Magnetmittels koaxial zu einer Mittelachse, insbesondere Symmetrieachse, des wenigstens einen scheiben- oder ringförmigen Magnetmittels angeordnet.

Das erste Magnetmittel und/oder das zweite Magnetmittel kann bzw. können beispielsweise zumindest ein Magnetelement umfassen, bevorzugt mehrere Magnetelemente umfassen, wobei das wenigstens eine Magnetelement eine längliche Form mit einer Längsachse aufweist, wobei die Längsachse einen Winkel α zwischen 5° und 175°, bevorzugt 40° und 140°, besonders bevorzugt 60° und 120°, höchst bevorzugt 70° bis 110°, mit einer Rotationsachse (Vertikalachse) einschließt. Sofern mehrere längliche Magnetelemente verwendet werden, können diese jeweils einen Winkel α in den angegebenen Wertebereichen mit der ersten Achse, d. h. mit der Vertikalachse, einschließen. Durch eine derartige Schrägstellung der Magnetelemente wird das von diesen Magnetelementen ausgehende Magnetfeld in eine vorteilhafte Ausrichtung zu dem beabstandeten und wechselwirkenden Magnetmittel gebracht. Mit anderen Worten wird das wenigstens eine Magnetelement des ersten Magnetmittels derart in dem Tonarmhaltekörper angeordnet, dass dessen Stirnseite dem zweiten Magnetelement zugewandt bzw. zu diesem ausgerichtet ist. Damit wird das von dem wenigstens einen Magnetelement des ersten Magnetmittels erzeugte Magnetfeld auf eine maximale magnetische Wechselwirkung zu dem zweiten Magnetmittel hin ausgerichtet und/oder positioniert.

Alternativ oder zusätzlich kann das erste Magnetmittel und/oder das zweite Magnetmittel zumindest ein, bevorzugt mehrere, Magnetelement(e) umfassen, wobei das wenigstens eine Magnetelement eine längliche Form mit einer Längsachse aufweist, wobei die Längsachse in einem Winkel β zu einer Horizontallinie ausgerichtet ist und der Winkel β im Bereich zwischen 1,5° und 45°, bevorzugt 2° und 35°, besonders bevorzugt 5° und 30°, höchst bevorzugt 10° bis 25°, weiter bevorzugt 12,5° und 20°, liegt. Bevorzugt ist die Längsachse des wenigstens einen Magnetelements nach radial außen nach unten abfallend ausgerichtet. Diese entsprechend schräge Ausrichtung der Magnete am Tonarmhaltekörper bzw. zu einer Rotationsachse oder Horizontalachse kann eine vorteilhafte Stabilisierung des Tonarmhaltekörpers ohne Erhöhung etwaiger mechanischer Widerstände während eines Verdrehens des Tonarmhaltekörpers ermöglichen.

Der Tonarmhaltekörper kann beispielsweise einen Aufnahmeraum zur Aufnahme eines Bestandteils der Lagerungseinrichtung aufweisen, wobei der Aufnahmeraum durch einen Wandungsabschnitt des Tonarmhaltekörpers begrenzt ist und das erste Magnetmittel zumindest abschnittsweise, bevorzugt überwiegend, besonders bevorzugt vollständig, an, d. h. in oder auf, einem Wandungsabschnitt angeordnet oder ausgebildet ist. Mit anderen Worten bildet der Tonarmhaltekörper einen Aufnahmeraum aus, wobei das tonarmhaltekörperseitige Magnetmittel zumindest abschnittsweise in dem Bereich des Aufnahmeraums angeordnet ist. Bevorzugt ist das erste Magnetmittel zumindest abschnittsweise, bevorzugt überwiegend, besonders bevorzugt vollständig, an einem einer Öffnung des Aufnahmeraums zugeordneten Randbereich des Wandungsabschnitts angeordnet oder ausgebildet. Der Tonarmhaltekörper kann beispielsweise zumindest abschnittsweise eine Topf- oder Glockenform aufweisen, wobei das Innere der Topf- und/oder Glockenform den Aufnahmeraum bildet, in welchem zumindest ein Bestandteil der Lagerungseinrichtung abschnittsweise angeordnet ist.

In einer optionalen Ausführungsform kann es vorgesehen sein, dass der Tonarmhaltekörper einen Aufnahmeraum zur Aufnahme eines Bestandteils des ersten Bauteils aufweist. Beispielsweise kann der Aufnahmeraum des Tonarmhaltekörpers sowohl einen Bestandteil der Lagerungseinrichtung als auch einen Bestandteil des ersten Bauteils aufnehmen bzw. die Lagerungseinrichtung und das erste Bauteil können in den Aufnahmeraum zumindest abschnittsweise einragen.

Beispielsweise ist der Aufnahmeraum durch einen Wandungsabschnitt des Tonarmhaltekörpers begrenzt, wobei der Wandungsabschnitt, insbesondere im Endmontagezustand und/oder während des bestimmungsgemäßen Betriebs der Vorrichtung zumindest abschnittsweise in einer Aufnahmeausnehmung des ersten Bauteils angeordnet ist. Mit anderen Worten weist sowohl der Tonarmhaltekörper als auch das erste Bauteil eine Ausnehmung auf, in welche ein Abschnitt des jeweils anderen einragt bzw. eingreift. Dieser Eingriff bildet einen durchgehenden Spaltraum aus, d. h. es kommt bei diesem Eingriff nicht zu einem Kontakt zwischen dem Tonarmhaltekörper und dem ersten Bauteil. Damit wird eine ungehinderte relative Bewegbarkeit des Tonarmhaltekörpers und des ersten Bauteils erreicht.

Das erste Magnetmittel und/oder das zweite Magnetmittel kann wenigstens zwei als Dauermagnet ausgebildete Magnetelemente umfassen. Damit kann das erste und/oder das zweite Magnetmittel wenigstens zwei getrennt voneinander vorliegende und voneinander beabstandet angeordnete und jeweils als Dauermagnet ausgebildete Magnetelemente umfassen. Bevorzugt sind sämtliche Magnetelemente des ersten Magnetmittels oder des zweiten Magnetmittels als Dauermagnet ausgebildet. Dadurch, dass ein Magnetmittel mehr als zwei, bevorzugt mehr als drei, besonders bevorzugt mehr als vier, höchst bevorzugt mehr als fünf, voneinander beabstandete Magnetelemente aufweist kann durch deren Anordnung eine bereichsabhängig auf das potenzielle Taumelverhalten des Tonarmhaltekörpers abgestimmte kontaktlose bzw. magnetfeldbasierende Abstützung des Tonarmhaltekörpers gegen ein etwaiges Taumelverhalten erwirkt werden. Beispielsweise sind die Magnetelemente eines Magnetmittels in zumindest zwei Gruppen von Magnetelementen an dem Tonarmhaltekörper und/oder an dem ersten Bauteil angeordnet. Die wenigstens eine erste und die wenigstens eine zweite Gruppe an Magnetelementen des ersten und/oder zweiten Magnetmittels kann beispielsweise symmetrisch, insbesondere punkt- oder achsensymmetrisch, insbesondere spiegelsymmetrisch, an dem Tonarmhaltekörper und/oder an dem ersten Bauteil angeordnet oder ausgebildet sein.

Es ist möglich, dass das erste Magnetmittel wenigstens ein als Dauermagnet ausgebildetes Magnetelement umfasst und das zweite Magnetmittel frei von Dauermagneten bzw. kein als Dauermagnet ausgebildetes Magnetelement umfasst. Alternativ kann das zweite Magnetmittel wenigstens ein als Dauermagnet ausgebildetes Magnetelement umfassen und das erste Magnetmittel frei von Dauermagneten sein bzw. kein als Dauermagnet ausgebildetes Magnetelement umfassen. Dadurch, dass ausschließlich entweder das erste oder das zweite Magnetmittel als Dauermagnet ausgebildete Magnetelemente umfasst, kann das jeweils andere Magnetmittel ein nur passiv, d. h. über die magnetische Einwirkung des Dauermagneten, magnetisierbares Magnetmittel sein. Dies reduziert die Kosten, da für das nicht-dauermagnetische Magnetmittel z. B. Stahl verwendet werden kann, wobei dieses Magnetmittel seine magnetische Eigenschaft schnell verliert, sobald das von dem anderen Magnetmitte, dem Dauermagneten, einwirkende Magnetfeld entfernt wird. Mit anderen Worten soll vorliegend unter einem Dauermagneten ein Magnet bzw. ein Material verstanden werden, das nach einer Magnetisierung diese über lange Zeit beibehält, wohingegen ein nicht-Dauermagnet innerhalb kürzerer Zeit nach einer Magnetisierung diese verliert bzw. die Magnetwirkung nicht mehr vorliegt. Ein als Dauermagnet bzw. als Permanent ausgebildetes Magnetmittel kann beispielsweise aus einem der folgenden Materialien besteht: (a) Seltene Erden wie Neodym, Samariumkobalt oder andere Seltene Erden; (b) Keramik oder Ferrite; (c) Alnico (Aluminium, Nickel und Kobalt) oder (d) andere magnetische Materialien, die derzeit existieren oder in Zukunft entwickelt werden und dieselbe Funktion erfüllen. Die Funktion besteht darin, eine Anziehungskraft zu erzeugen, die eine Sogwirkung auf das andere Magnetmittel ausübt. Die Magnetmittel befindet sich nicht in physischem Kontakt zueinander.

Neben der Vorrichtung betrifft die Erfindung ein Verfahren zur Lagerung eines Tonarms, insbesondere eines Tonarms eines Schallplattenspielers, vermittels einer hierin beschriebenen Vorrichtung. Hierbei ist es vorgesehen, dass ein Bereitstellen eines ersten Bauteils erfolgt, wobei an dem ersten Bauteil ein zweites Magnetmittel angeordnet oder ausgebildet ist. Ferner erfolgt ein Bereitstellen eines Tonarmhaltekörpers, wobei an dem Tonarmhaltekörper ein erstes Magnetmittel angeordnet oder ausgebildet ist. Sodann erfolgt ein Anordnen des Tonarmhaltekörpers derart, (a) dass ein Lagern des Tonarmhaltekörpers an einer Lagerungseinrichtung erfolgt und (b) dass das erste Magnetmittel und das zweite Magnetmittel über eine magnetisch sich anziehende und/oder abstoßende Magnetkraft miteinander wechselwirken. Das erste Bauteil kann zumindest abschnittsweise, bevorzugt überwiegend, besonders bevorzugt vollständig, magnetisch oder magnetisierbar sein und damit das zweite Magnetmittel ausbilden. Alternativ oder zusätzlich kann der Tonarmhaltekörper zumindest abschnittsweise, bevorzugt überwiegend, besonders bevorzugt vollständig, magnetisch oder magnetisierbar sein und damit das erste Magnetmittel ausbilden. Optional oder ersatzweise kann ein Magnetelement, insbesondere ein als Permanentmagnet ausgebildetes Magnetelement, an dem Tonarmhaltekörper und/oder an dem ersten Bauteil befestigt sein, insbesondere über eine kraft- und/oder form- und/oder stoffschlüssige Befestigung.

Sämtliche Vorteile, Einzelheiten, Ausführungen und/oder Merkmale der erfindungsgemäßen Vorrichtung sind auf das erfindungsgemäße Verfahren übertragbar bzw. anzuwenden und umgekehrt.

Die Erfindung ist anhand von Ausführungsbeispielen in den Zeichnungen näher erläutert. Dabei zeigt:
Fig. 1 eine perspektivische Prinzipdarstellung im Vollschnitt einer Vorrichtung gemäß einem Ausführungsbeispiel;
Fig. 2 eine schematische Explosionsdarstellung einzelner Bauteile einer Vorrichtung gemäß Figur 1;
Fig. 3 eine perspektivische Prinzipdarstellung eines Tonarmhaltekörper gemäß einem Ausführungsbeispiel;
Fig. 4 eine perspektivische Prinzipdarstellung eines Tonarmhaltekörper gemäß Figur 3 in einer zur Figur 3 um 90° gedrehten Ansicht;
Fig. 5 eine Unteransicht auf einen mit einem Tonarm versehenen Tonarmhaltekörper;
Fig. 6 eine schematische Vollschnittdarstellung eines Tonarmhaltekörper gemäß Figur 3;
Fig. 7 eine schematische Teilschnittdarstellung einer Vorrichtung gemäß Figur 1.

In den Figuren ist eine Vorrichtung 1 zur Lagerung eines Tonarms 2, insbesondere eines Tonarms 2 eines Schallplattenspielers (nicht dargestellt) gezeigt. Die Vorrichtung umfasst ein erstes Bauteil 3 und einen Tonarmhaltekörper 4. Der Tonarmhaltekörper 4 ist über eine Lagerungseinrichtung 5 um eine erste Achse 6, insbesondere eine Vertikalachse, drehbar und um eine zweite Achse 7, insbesondere um eine Horizontalachse, schwenkbar zu dem ersten Bauteil 3 gelagert. Damit ist der Tonarm 2 bzw. der Tonarmhaltekörper 4 auch relativ zu einem Plattenteller (nicht dargestellt) bzw. zu einer auf einem Plattenteller (nicht dargestellt) aufliegenden Schallplatte um die erste Achse 6 drehbar und um wenigstens eine Horizontalachse, insbesondere um zwei senkrecht zueinander ausgerichteten und in einer Horizontalebene liegenden Horizontalachsen schwenkbar gelagert. Bei diesem Aufbau spricht man auch von einem sogenannten Radialtonarm-Konzept, sodass der Tonarm eine Drehbewegung während dessen bestimmungsgemäßen Betriebs zu der Schallplatte ausführt.

Wenigstens ein erstes Magnetmittel 8 ist an, d. h. z. B. in oder auf, dem Tonarmhaltekörper 4 und wenigstens ein zweites Magnetmittel 9 an, d. h. z. B. in oder auf, dem ersten Bauteil 3 angeordnet oder ausgebildet. Dabei ergibt sich eine magnetische Wechselwirkung zwischen dem ersten Magnetmittel 8 und dem zweiten Magnetmittel 9 über eine magnetisch sich anziehende und/oder abstoßende Magnetkraft.

Die Lagerungseinrichtung 4 umfasst in der in den Figuren dargestellten Ausführungsform eine Ein-Punkt-Lagerung also eine Lagerung des Tonarmhaltekörpers 4 über einen Kontaktpunkt. Hierzu ist ein stabförmiges Lagerungsmittel, z. B. eine Lagernadel 22, an einem Lagergrundkörper 23 fixiert, wobei eine dem Tonarmhaltekörper 4 zugewandte Lagerspitze der Lagernadel 22 in einer in dem Tonarmhaltekörper 4 befestigten Lagernadelaufnahme 24 zu einem punktuellen Kontakt kommt. Die Lagernadelaufnahme 24 und/oder die Lagernadel 22 kann aus einem eine geringe mechanische Reibung aufweisenden Material ausgebildet sein, beispielsweise kann die Lagernadelaufnahme und/oder die Lagernadel 22 aus zumindest abschnittsweise einem Edelstein, insbesondere aus Saphir, bestehen oder einen Körper aus Saphir umfassen. Damit kann der Kontakt der Lagermittel des Tonarmhaltekörpers 4 und der Lagerungseinrichtung 5 wenigstens einen Lagerstein umfassen. So kann z. B. ein erster Lagerpartner aus Stahl oder einem Lagerstein und der zweite Lagerpartner aus einem Lagerstein bestehen. Die Verwendung von Lagersteinen reduziert den Verschleiß und durch erhöht eine gleichmäßige Kraftübertragung während einer Bewegung des Lagers. Es kann beispielsweise vorgesehen sein, dass die Lagernadelaufnahme 24 ein Aufnahmeloch umfasst, in welches die Lagerspitze der Lagernadel 22 zumindest abschnittsweise eindringt. Alternativ kann eine Ein-Punkt-Lagerung nach Art eines Kugelgelenks ausgeführt werden. Die Lagerung kann allgemein beispielsweise über zwei Raumachsen eine Drehung ermöglichen und translatorische Kräfte entlang wenigstens zweier Raumachsen aufnehmen bzw. eine entsprechende Bewegung verhindern. Optional kann auch eine Kraftaufnahme der Lagerungseinrichtung über drei translatorische Freiheitsgrade erfolgen.

In der in den Figuren dargestellten Ausführungsform ist das erste Bauteil 3 unterhalb des Tonarmhaltekörpers 4 angeordnet. So ist das erste Bauteil 3 am unteren Ende bzw. an dem der Tonarmaufnahme 25 abgewandten Ende des Tonarmhaltekörpers 4 zugeordnet bzw. angeordnet. Die Tonarmaufnahme 25 ist als Kanalabschnitt des Tonarmhaltekörpers 4 ausgebildet, in welche der Tonarm 2 aufnehmbar ist. Beispielsweise kann der Tonarm 2 vermittels einer Klemmkraft in der Tonarmaufnahme 25 fixiert werden.

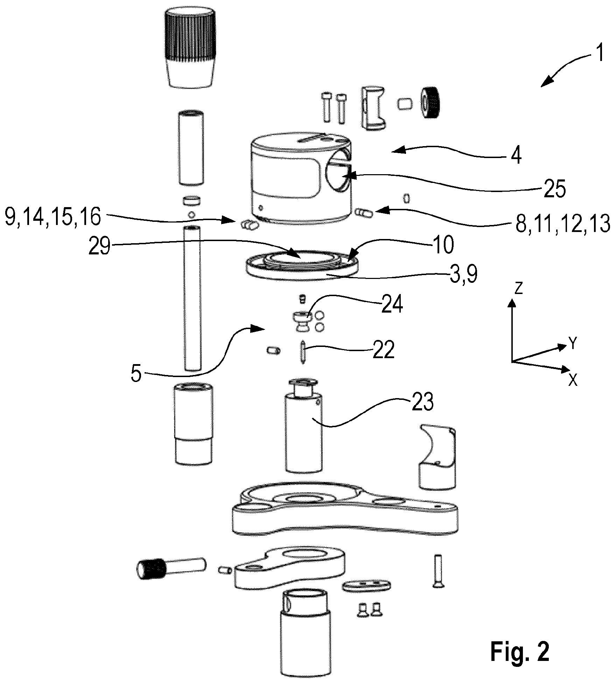

Das erste Bauteil 3 kann beispielsweise zumindest abschnittsweise bevorzugt überwiegend, besonders bevorzugt vollständig, als zweites Magnetmittel 9 ausgebildet sein. In der in Figur 2 dargestellten Ausführungsform ist das erste Bauteil 3 selbst das zweite Magnetmittel 9. Mit anderen Worten ist das erste Bauteil 3 selbst zumindest abschnittsweise, bevorzugt überwiegend, besonders bevorzugt vollständig, als Magnet und damit als zweites Magnetmittel 9 wirksam. Dabei ist das Material des ersten Bauteils 3 vorzugsweise derart gewählt, dass dieses selbst magnetisch oder magnetisierbar ist, derart, dass sich im bestimmungsgemäßen Betrieb der Vorrichtung 1, aufgrund der ersten und zweiten Magnetmittel 8, 9 und/oder sonstiger Hilfsmittel (z. B. einem Elektromagneten), sich eine magnetische Kraft zwischen dem ersten und zweiten Magnetmittel 9 einstellt, welche eine stabilisierende Wirkung auf die Lagerung des Tonarmhaltekörpers 4 hat. So kann das erste Bauteil 3 beispielsweise als ein einstückiger Metallring ausgebildet sein, der aufgrund des Vorsehens von wenigstens einem Permanentmagneten als Magnetelement 11, 12, 13, 14, 15, 16 des ersten Magnetmittels 8 bzw. als tonarmhaltekörperseitiges Magnetelement 11, 12, 13, 14, 15, 16 eine magnetische Wirkung in dem ersten Bauteil 3 bzw. in dem Metallring induziert und sich sonach eine magnetische Kraft zwischen dem ersten Magnetmittel 8 und dem zweiten Magnetmittel 9 bzw. dem ersten Bauteil 3 ausbildet.

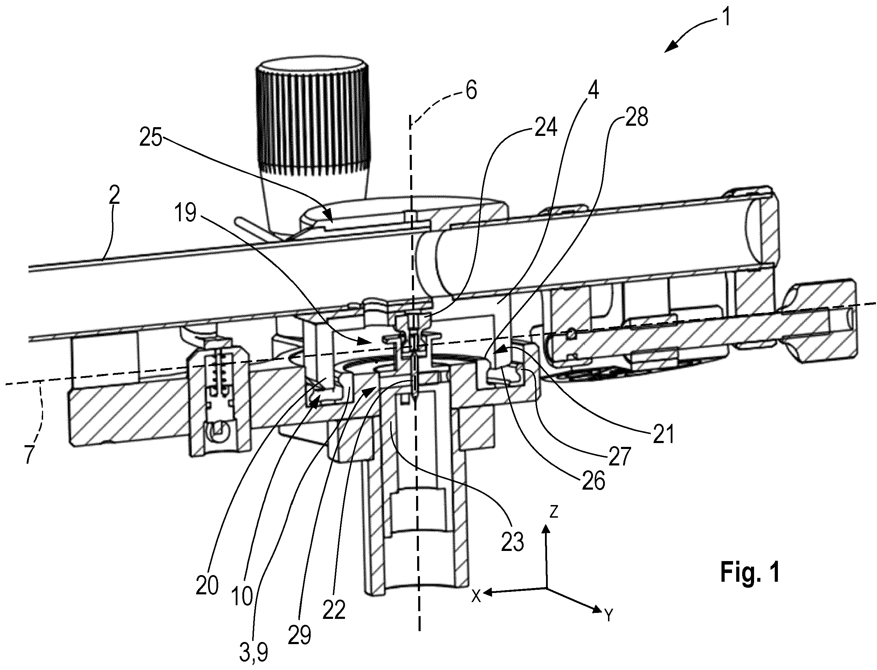

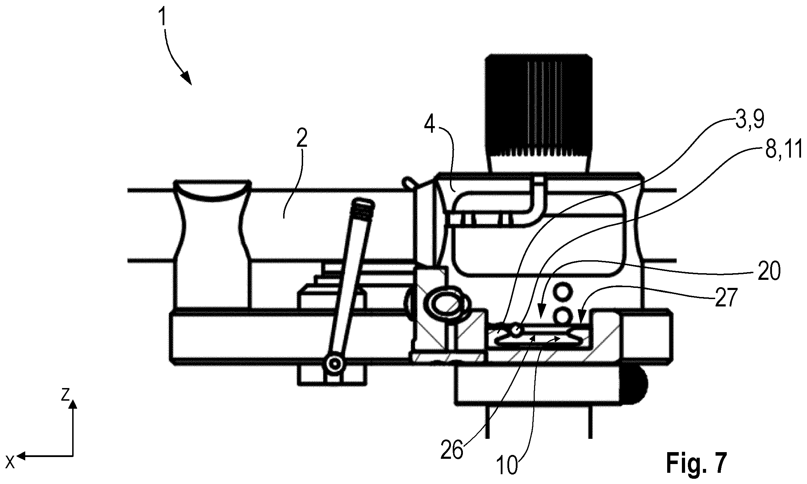

Das erste Bauteil 3 eine Aufnahmeausnehmung 10 aufweist, in welche der Tonarmhaltekörper 4 zumindest abschnittsweise aufnehmbar ist. Die Aufnahmeausnehmung 10 ist beispielsweise als Ringnut, insbesondere als kreisförmige Ringnut, ausgebildet, wobei ein tonarmhaltekörperseitiger Ringwulst, insbesondere ein kreisförmige Ringwulst des Tonarmhaltekörpers 4 in die Aufnahmeausnehmung 10 einragt. In der in Figur 7 gezeigten Darstellung ist die Schnittebene der Figur so gelegt, dass diese parallel zu der ersten Achse 6 und im Nahbereich neben dem Tonarmhaltekörper 4 platziert ist, sodass der Tonarmhaltekörper 4 nicht geschnitten wird, jedoch das erste Bauteil 3 im Naheberich des Tonarmhaltekörpers 4 geschnitten vorliegt. Es ist erkennbar, dass die Unterkante 26 des Tonarmhaltekörpers 4 unterhalb einer Oberkante 27, 28 des ersten Bauteils 3 positioniert ist. Die Oberkante 27 kann dabei die radial außenliegende Oberkante 27 des ersten Bauteils 3 betreffen, die Oberkante 28 kann dabei die radial innenliegende Oberkante 28 des ersten Bauteils 3 betreffen. Die Oberkanten 27, 28 können beispielsweise absolute oder relative Maxima der Höhenerstreckung des ersten Bauteils 3 ausbilden. Vorzugsweise ist die radial innenliegende Oberkante 28 des ersten Bauteils 3 höherliegend als die radial außenliegende Oberkante 27 des ersten Bauteils 3 ausgebildet, vgl. Figur 1. Zwischen der radial innenliegenden Oberkante 27 und der radial außen liegenden Oberkante 28 kann die Aufnahmeausnehmung 10 ausgebildet sein.

Das erste Bauteil 3 kann beispielsweise als ringförmiger Körper ausgebildet sein. In den Figuren ist das erste Bauteil 3 beispielhaft als ein kreisringförmiger Körper ausgebildet, der einen zentralen Durchbruch 29 aufweist. Innerhalb des Durchbruchs 29 kann zumindest abschnittsweise die Lagernadel 22 und/oder ein Lagergrundkörper 23 angeordnet sein. Vorzugsweise ist die Lagernadel 22 und/oder der Lagergrundkörper 23 in dem Durchbruch 29, insbesondere verdrehsicher, befestigt. Damit kann zwischen dem Lagergrundkörper 23 und/oder der Lagernadel 22 einerseits und dem ersten Bauteil 3 andererseits zumindest temporär, bevorzugt stets, keine Drehbewegung ausgeführt werden. Eine zumindest temporär ermöglichte bzw. nicht ermöglichte Bewegbarkeit kann beispielsweise vermittels eines aktivierbaren und deaktivierbaren Sperrmechanismus ermöglicht werden. Mit anderen Worten kann das erste Bauteil 3 unbeweglich bzw. starr mit einer Lagerungseinrichtung 5 angeordnet oder ausgebildet bzw. befestigt sein. Hierbei werden die dem ersten Bauteil 3 zugeordneten Bestandteile der Lagerungseinrichtung 5 betrachtet.

Das erste Magnetmittel 8 und/oder das zweite Magnetmittel 9 kann beispielsweise können wenigstens zwei Magnetelemente 11, 12, 13, 14, 15, 16 aufweisen. In der in den Figuren gezeigten Ausführungsformen ist das zweite Magnetmittel 9 als ein einstückiger Ringkörper ausgebildet, welche selbst magnetisch oder magnetisierbar ist und damit das zweite Magnetmittel 9 bildet. Der Tonarmhaltekörper 4 weist mindestens zwei, insbesondere zylindrische, Magnetelemente 11, 12, 13, 14, 15, 16 auf. In dem Beispiel sind Magnetelemente 11, 12, 13, 14, 15, 16 als kreiszylindrische Körper ausgebildet. Insbesondere kann wenigstens ein Magnetelement, insbesondere sämtliche Magnetelemente 11, 12, 13, 14, 15, 16, in an einer nach außen weisenden oder nach innen weisenden Oberfläche des Tonarmhaltekörpers 4 ausgebildeten Aufnahmelöchern 30 zumindest abschnittsweise eingesetzt sein. Das wenigstens eine Aufnahmeloch 30 kann beispielsweise als Durchgangsloch oder als Sackloch ausgebildet sein.

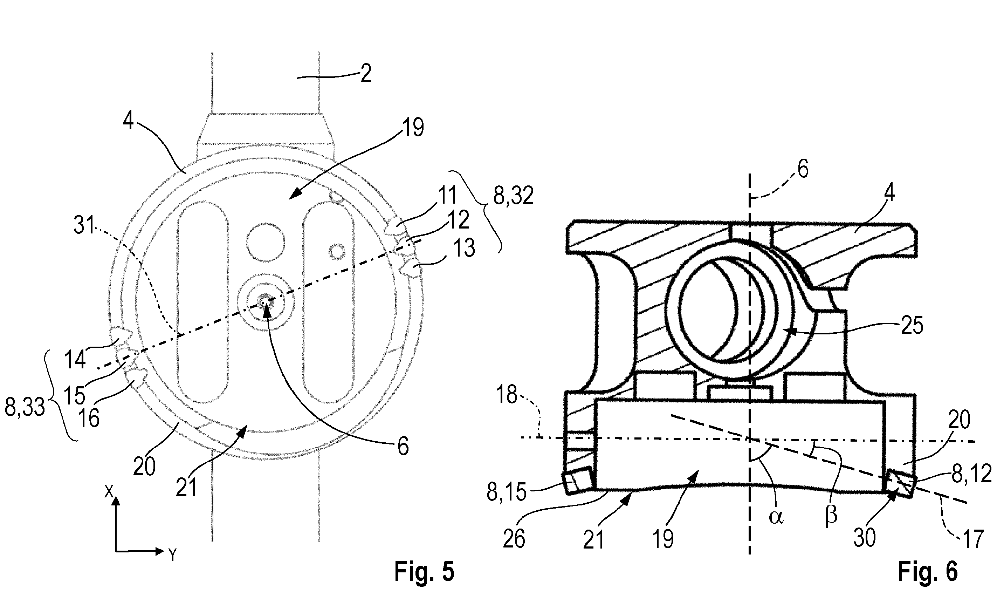

In einer bevorzugten Ausführungsform kann beispielsweise (a) zumindest ein erstes und ein zweites Magnetelement 11, 12, 13, 14, 15, 16 des ersten Magnetmittels 8 oder (b) zumindest ein erstes und ein zweites Magnetelement 11, 12, 13, 14, 15, 16 des zweiten Magnetmittels 9 symmetrisch, insbesondere punktsymmetrisch und/oder spiegelsymmetrisch, zueinander angeordnet oder ausgebildet sein. Wie beispielsweise aus Figur 5 erkennbar, sind die wenigstens zwei Magnetelemente 11, 12, 13, 14, 15, 16 punktsymmetrisch um das Rotationszentrum des Tonarmhaltekörpers 4 an dem Tonarmhaltekörper 4 angeordnet. Durch die rotationssymmetrische und/oder punktsymmetrische Anordnung der Magnetelemente 11, 12, 13, 14, 15, 16 am Tonarmhaltekörper 4 wird es erreicht, dass eine über eine Drehbewegung des Tonarmhaltekörpers 4 radial homogen bzw. konstant wirkende magnetische Stabilisationswirkung für den Tonarmhaltekörper 4 erreicht wird. Mit anderen Worten sind die Magnetkräfte bzgl. einer Taumelbewegung des Tonarmhaltekörpers 4 derart am Umfang des Tonarmhaltekörpers 4 verteilt, dass wenigstens zwei Magnetelemente 11, 12, 13, 14, 15, 16 gleichzeitig eine magnetische Stabilisierung bzw. eine magnetische Abstützung des Tonarmhaltekörpers 4 ermöglichen. Hierbei liegen zwei Magnetelemente 11, 12, 13, 14, 15, 16, bevorzugt sämtliche Magnetelemente 11, 12, 13, 14, 15, 16 des Tonarmhaltekörpers 4 jeweils paarweise, auf einer Geraden, auf der auch der Lagerpunkt der Ein-Punkt-Lagerung des Tonarmhaltekörpers 4 und/oder die auch die erste Achse 6 (Vertikalachse) schneidet, vgl. gerade Linie 31. Auf der Geraden 31 liegen die Magnetelement 13, 14 sowie die erste Achse 6.

Vorzugsweise weist der Tonarmhaltekörper 4 zwei Gruppen 32, 33 auf, die jeweils aus mehr als zwei Magnetelementen 11, 12, 13, 14, 15, 16 gebildet sind, wobei die zwei Gruppen 32, 33 symmetrisch zueinander, bevorzugt punkt und/oder spiegelsymmetrisch zueinander am Tonarmhaltekörper 4 angeordnet oder ausgebildet sind, vgl. Figur 5. Optional ist es möglich, dass die wenigstens zwei Gruppen 32, 33 an Magnetelementen 11, 12, 13, 14, 15, 16 alternativ oder zusätzlich an dem ersten Bauteil 3 angeordnet oder ausgebildet sind.

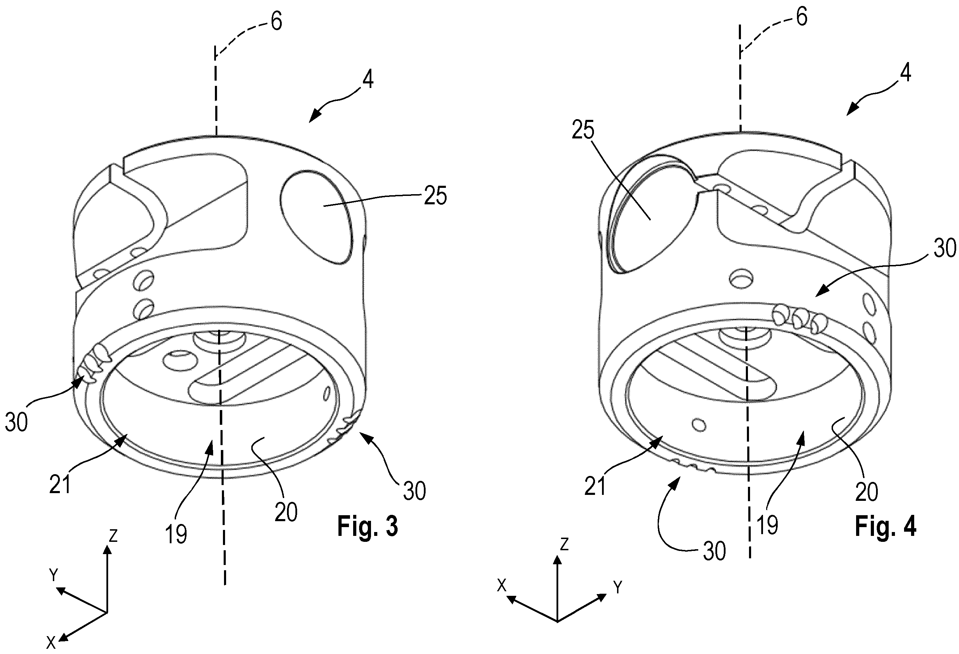

Das erste Magnetmittel 8 und/oder das zweite Magnetmittel 9 kann bzw. können zumindest ein, bevorzugt mehrere, Magnetelement(e) 11, 12, 13, 14, 15, 16 umfassen, wobei das wenigstens eine Magnetelement 11, 12, 13, 14, 15, 16 eine längliche Form mit einer Längsachse 17 aufweist, wobei die Längsachse 17 einen Winkel α zwischen 5° und 175°, bevorzugt 40° und 140°, besonders bevorzugt 60° und 120°, höchst bevorzugt 70° bis 110°, mit der ersten Achse 6 einschließt, vgl. Figuren 2, 4 und 6. Aufgrund einer Schräglage der Magnetelement 11, 12, 13, 14, 15, 16 ist der Wert des Winkels α von 90°, bevorzugt der Wertebereich von 87,5° bis 92,5°, aus den vorgenannten Wertebereichen des Winkels α auszuschließen. In den Figuren 4 und 6 sind lediglich die Aufnahmelöcher 30 zur Aufnahme der Magnetelement 11, 12, 13, 14, 15, 16 dargestellt, da diese jedoch an die Geometrie der Magnetelement 11, 12, 13, 14, 15, 16 angepasst sind, ist die schräge Anordnung der länglichen Magnetelemente 11, 12, 13, 14, 15, 16 relativ zur ersten Achse 6, insbesondere zur Vertikalachse, ersichtlich. Diese schräge Anordnung ermöglicht es, dass eine Ausrichtung des von den Magnetelementen 11, 12, 13, 14, 15, 16 ausgehenden Magnetfelds eine Abstützungskomponente in eine nach unten und nach radial außen weisenden Richtung ausführt.

Das erste Magnetmittel 8 und/oder das zweite Magnetmittel 9 kann bzw. können zumindest ein, bevorzugt mehrere, Magnetelemente 11, 12, 13, 14, 15, 16 umfassen, wobei das wenigstens eine Magnetelement 11, 12, 13, 14, 15, 16 eine längliche Form mit einer Längsachse 17 aufweist, wobei die Längsachse 17 in einem Winkel β zu einer Horizontallinie 18 ausgerichtet ist und der Winkel β zwischen 1,5° und 45°, bevorzugt 2° und 35°, besonders bevorzugt 5° und 30°, höchst bevorzugt 10° bis 25°, weiter bevorzugt 12,5° und 20,0°, beträgt. Durch diese schräge Ausrichtung der Magnetelemente 11, 12, 13, 14, 15, 16 am Tonarmkörper bzw. zu einer horizontal verlaufenden Ebene bzw. zu einer Ebene, die senkrecht zur ersten Achse 6 (Rotationsachse und Vertikalachse) verläuft, wird eine vorteilhafte Ausgestaltung des den Tonarmhaltekörper stabilisierenden Magnetfeldes erreicht.

Der Tonarmhaltekörper 4 kann beispielsweise einen Aufnahmeraum 19 zur Aufnahme eines Bestandteils der Lagerungseinrichtung 5 aufweisen, wobei der Aufnahmeraum 19 durch einen Wandungsabschnitt 20 des Tonarmhaltekörpers 4 begrenzt ist und das erste Magnetmittel 8 zumindest abschnittsweise, bevorzugt überwiegend, besonders bevorzugt vollständig, an, d. h. z. B. in oder auf, einem Wandungsabschnitt 20 angeordnet oder ausgebildet ist. Der Aufnahmeraum 19 bzw. die Aussparung des Tonarmhaltekörpers 4 kann beispielsweise eine zylindrische, insbesondere kreiszylindrische, Grundform aufweisen. Die Mantelfläche dieser zylindrischen, insbesondere kreiszylindrischen, Grundform kann durch den Wandungsabschnitt 20 begrenzt sein, wobei an diesem Wandungsabschnitt 20, bevorzugt an der nach radial außen weisenden Oberfläche des Wandungsabschnitts 20 die Magnetelemente 11, 12, 13, 14, 15, 16 zur Ausbildung des ersten Magnetmittels 4 angeordnet oder ausgebildet sind. Das erste Magnetmittel 8 kann beispielsweise zumindest abschnittsweise, bevorzugt überwiegend, besonders bevorzugt vollständig, an einem einer Öffnung 21 des Aufnahmeraums 19 zugeordneten Randbereich des Wandungsabschnitts 20 angeordnet oder ausgebildet sein, vgl. Figur 6.

Der Aufnahmeraum 19 des Tonarmhaltekörpers 4 kann zur Aufnahme eines Bestandteils des ersten Bauteils 3 genutzt werden. Bevorzugt ist der Aufnahmeraum 19 durch einen Wandungsabschnitt 20 des Tonarmhaltekörpers 4 begrenzt, wobei der Wandungsabschnitt 20 zumindest abschnittsweise in einer Aufnahmeausnehmung 10 des ersten Bauteils 3 angeordnet ist, vgl. Figuren 1 und 5. Mit anderen Worten greift sowohl ein Abschnitt des Tonarmhaltekörpers 4 in eine Aufnahmeausnehmung 10 des ersten Bauteils 3 ein als auch ein Abschnitt des ersten Bauteils 3 in den Aufnahmeraum 19 des Tonarmhaltekörpers 4.

Das erste Magnetmittel 8 und/oder das zweite Magnetmittel 9 kann bzw. können wenigstens zwei als Dauermagnet ausgebildete Magnetelemente 11, 12, 13, 14, 15, 16 umfassen. Bevorzugt sind sämtliche Magnetelemente 11, 12, 13, 14, 15, 16 des ersten und/oder zweiten Magnetmittels 8, 9 als Dauermagnet ausgebildet.

Ferner umfasst die Erfindung ein Verfahren zur Lagerung eines Tonarms 2, insbesondere eines Tonarms 2 eines Schallplattenspielers, vermittels einer hierin beschriebenen Vorrichtung 1. Zunächst erfolgt ein Bereitstellen eines ersten Bauteils 3, wobei an dem ersten Bauteil 3 ein zweites Magnetmittel 9 angeordnet oder ausgebildet ist sowie ein Bereitstellen eines Tonarmhaltekörpers 4, wobei an dem Tonarmhaltekörper 4 ein erstes Magnetmittel 8 angeordnet oder ausgebildet ist. Ferner erfolgt ein Anordnen des Tonarmhaltekörpers 4 derart, dass ein Lagern des Tonarmhaltekörpers 4 an einer Lagerungseinrichtung 5 erfolgt und dass das erste Magnetmittel 8 und das zweite Magnetmittel 9 über eine magnetisch sich anziehende und/oder abstoßende Magnetkraft miteinander wechselwirken.

### BEZUGSZEICHENLISTE

- 1: Vorrichtung
- 2: Tonarm
- 3: erstes Bauteil
- 4: Tonarmhaltekörper
- 5: Lagerungseinrichtung
- 6: erste Achse (z. B. Vertikalachse)
- 7: zweite Achse (z. B. Horizontalachse)
- 8: erstes Magnetmittel von 4
- 9: zweites Magnetmittel von 3
- 10: Aufnahmeausnehmung von 3
- 11: erstes Magnetelement
- 12: zweites Magnetelement
- 13: drittes Magnetelement
- 14: viertes Magnetelement
- 15: fünftes Magnetelement
- 16: sechstes Magnetelement
- 17: Längsachse von 11, 12, 13, 14, 15, 16
- 18: Horizontallinie
- 19: Aufnahmeraum von 4
- 20: Wandungsabschnitt von 4 (der 19 begrenzt)
- 21: Öffnung von 19
- 22: Lagernadel
- 23: Lagergrundkörper
- 24: Lagernadelaufnahme
- 25: Tonarmaufnahme von 4
- 26: Unterkante von 4
- 27: radial außenliegende Oberkante von 3
- 28: radial innenliegende Oberkante von 3
- 29: Durchbruch von 3
- 30: Aufnahmeloch von 4
- 31: gerade Linie
- 32: erste Gruppe von Magnetelement 11, 12, 13
- 33: zweite Gruppe von Magnetelement 14, 15, 16

- α: Winkel zwischen 17 und 6
- β: Winkel zwischen 17 und 18

## Patentansprüche

1. Vorrichtung (1) zur Lagerung eines Tonarms (2), insbesondere eines Tonarms (2) eines Schallplattenspielers, mit
- einem ersten Bauteil (3) und
- einem Tonarmhaltekörper (4), der über eine Lagerungseinrichtung (5) um eine erste Achse (6), insbesondere eine Vertikalachse, drehbar und um eine zweite Achse (7), insbesondere um eine Horizontalachse, schwenkbar zu dem ersten Bauteil (3) gelagert ist, wobei
wenigstens ein erstes Magnetmittel (8) an dem Tonarmhaltekörper (4) und wenigstens ein zweites Magnetmittel (9) an dem ersten Bauteil (3) angeordnet oder ausgebildet sind, wobei das erste Magnetmittel (8) und das zweite Magnetmittel (9) über eine magnetisch sich anziehende und/oder abstoßende Magnetkraft miteinander wechselwirken.

2. Vorrichtung (1) nach Anspruch 1, **dadurch gekennzeichnet, dass** das erste Bauteil (3) unterhalb des Tonarmhaltekörpers (4) angeordnet ist.

3. Vorrichtung (1) nach Anspruch 1 oder 2, **dadurch gekennzeichnet, dass** das erste Bauteil (3) zumindest abschnittsweise bevorzugt überwiegend, besonders bevorzugt vollständig, als zweites Magnetmittel (9) ausgebildet ist.

4. Vorrichtung (1) nach einem der Ansprüche 1 bis 3, **dadurch gekennzeichnet, dass** das erste Bauteil (3) eine Aufnahmeausnehmung (10) aufweist, in welche der Tonarmhaltekörper (4) zumindest abschnittsweise aufnehmbar ist.

5. Vorrichtung (1) nach Anspruch 4, **dadurch gekennzeichnet, dass** die Aufnahmeausnehmung (10) als Ringnut, insbesondere als kreisförmige Ringnut, ausgebildet ist.

6. Vorrichtung (1) nach einem der vorhergehenden Ansprüche, **dadurch gekennzeichnet, dass** das erste Bauteil (3) als ringförmiger Körper ausgebildet ist, bevorzugt ist das erste Bauteil (3) als ein kreisringförmiger Körper ausgebildet.

7. Vorrichtung (1) nach einem der vorhergehenden Ansprüche, **dadurch gekennzeichnet, dass** das erste Bauteil (3) unbeweglich bzw. starr mit einer Lagerungseinrichtung (5) angeordnet oder ausgebildet ist.

8. Vorrichtung (1) nach einem der vorhergehenden Ansprüche, **dadurch gekennzeichnet, dass** das erste Magnetmittel (8) und/oder das zweite Magnetmittel (9) wenigstens zwei Magnetelemente (11, 12, 13, 14, 15, 16) aufweist.

9. Vorrichtung (1) nach einem der vorhergehenden Ansprüche, **dadurch gekennzeichnet, dass**
- zumindest ein erstes und ein zweites Magnetelement (11, 12, 13, 14, 15, 16) des ersten Magnetmittels (8) oder
- zumindest ein erstes und ein zweites Magnetelement (11, 12, 13, 14, 15, 16) des zweiten Magnetmittels (9)
symmetrisch, insbesondere punktsymmetrisch und/oder spiegelsymmetrisch, zueinander angeordnet oder ausgebildet sind.

10. Vorrichtung (1) nach einem der vorhergehenden Ansprüche, **dadurch gekennzeichnet, dass** das erste Magnetmittel (8) und/oder das zweite Magnetmittel (9) zumindest ein, bevorzugt mehrere, Magnetelement(e) umfasst, wobei das wenigstens eine Magnetelement (11, 12, 13, 14, 15, 16) eine längliche Form mit einer Längsachse (17) aufweist, wobei die Längsachse (17) einen Winkel α zwischen 5° und 175°, bevorzugt 40° und 140°, besonders bevorzugt 60° und 120°, höchst bevorzugt 70° bis 110°, mit der ersten Achse (6) einschließt.

11. Vorrichtung (1) nach einem der vorhergehenden Ansprüche, **dadurch gekennzeichnet, dass** das erste Magnetmittel (8) und/oder das zweite Magnetmittel (9) zumindest ein, bevorzugt mehrere, Magnetelement(e) (11, 12, 13, 14, 15, 16) umfasst, wobei das wenigstens eine Magnetelement (11, 12, 13, 14, 15, 16) eine längliche Form mit einer Längsachse (17) aufweist, wobei die Längsachse (17) in einem Winkel β zu einer Horizontallinie (18) ausgerichtet ist und der Winkel β zwischen 1,5° und 45°, bevorzugt 2° und 35°, besonders bevorzugt 5° und 30°, höchst bevorzugt 10° bis 25°, weiter bevorzugt 12,5° und 20,0°, beträgt.

12. Vorrichtung (1) nach einem der vorhergehenden Ansprüche, **dadurch gekennzeichnet, dass** der Tonarmhaltekörper (4) einen Aufnahmeraum (19) zur Aufnahme eines Bestandteils der Lagerungseinrichtung (5) aufweist, wobei der Aufnahmeraum (19) durch einen Wandungsabschnitt (20) des Tonarmhaltekörpers (4) begrenzt ist und das erste Magnetmittel (8) zumindest abschnittsweise, bevorzugt überwiegend, besonders bevorzugt vollständig, an einem Wandungsabschnitt (20) angeordnet oder ausgebildet ist, insbesondere ist das erste Magnetmittel (8) zumindest abschnittsweise, bevorzugt überwiegend, besonders bevorzugt vollständig, an einem einer Öffnung (21) des Aufnahmeraums (19) zugeordneten Randbereich des Wandungsabschnitts (20) angeordnet oder ausgebildet.

13. Vorrichtung (1) nach einem der vorhergehenden Ansprüche, **dadurch gekennzeichnet, dass** der Tonarmhaltekörper (4) einen Aufnahmeraum (19) zur Aufnahme eines Bestandteils des ersten Bauteils (3) aufweist, bevorzugt ist der Aufnahmeraum (19) durch einen Wandungsabschnitt (20) des Tonarmhaltekörpers (4) begrenzt, wobei der Wandungsabschnitt (20) zumindest abschnittsweise in einer Aufnahmeausnehmung (10) des ersten Bauteils (3) angeordnet ist.

14. Vorrichtung (1) nach einem der vorhergehenden Ansprüche, **dadurch gekennzeichnet, dass** das erste Magnetmittel (8) und/oder das zweite Magnetmittel (9) wenigstens zwei als Dauermagnet ausgebildete Magnetelemente (11, 12, 13, 14, 15, 16) umfasst, bevorzugt sind sämtliche Magnetelemente (11, 12, 13, 14, 15, 16) des ersten und/oder zweiten Magnetmittels (8, 9) als Dauermagnet ausgebildet.

15. Verfahren zur Lagerung eines Tonarms (2), insbesondere eines Tonarms (2) eines Schallplattenspielers, vermittels einer Vorrichtung (1) nach Anspruch 1 mit den Verfahrensschritten:
- Bereitstellen eines ersten Bauteils (3), wobei an dem ersten Bauteil (3) ein zweites Magnetmittel (9) angeordnet oder ausgebildet ist;
- Bereitstellen eines Tonarmhaltekörpers (4), wobei an dem Tonarmhaltekörper (4) ein erstes Magnetmittel (8) angeordnet oder ausgebildet ist;
- Anordnen des Tonarmhaltekörpers (4) derart, dass ein Lagern des Tonarmhaltekörpers (4) an einer Lagerungseinrichtung (5) erfolgt und dass das erste Magnetmittel (8) und das zweite Magnetmittel (9) über eine magnetisch sich anziehende und/oder abstoßende Magnetkraft miteinander wechselwirken.
